# EUROPEAN PATENT SPECIFICATION

(11) **EP 0 485 121 B1**
(45) Date of publication and mention of the grant of the patent: **22.03.1995**
(21) Application number: 91310112.7
(22) Date of filing: 01.11.1991
(51) Int. Cl.: B60N 2/28

(54) **Child safety seat**
Kindersicherheitssitz
Siège de securité pour enfant

(30) Priority: 09.11.1990 GB 9024434
(43) Date of publication of application: 13.05.1992
(73) Proprietor: BRITAX-EXCELSIOR LIMITED, Andover, Hampshire SP10 3UW (GB)
(72) Inventor: Barley, Geoffrey Wilfred, Claybrooke Magna, Leicestershire (GB)
(74) Representative: Hollinghurst, Antony

(56) References cited:
- DE-A- 2 652 881
- FR-A- 2 296 354
- US-A- 2 629 109
- US-A- 4 640 545
- US-A- 4 641 844

## Description

This invention relates to a safety seat for use by a child in a motor vehicle, of the type comprising a child seat body having a backrest and a seat portion, support means for supporting the child seat body on a substantially horizontal surface so that a seated occupant faces rearwardly in the vehicle and means secured to the child seat body for engagement with an adult safety belt so as to restrain the child seat body against forward movement, the backrest of the child seat body being adapted to abut against a rearwardly extending protuberance on the vehicle in front of said substantially horizontal surface.

A safety seat of this type, in which the horizontal surface is part of a vehicle seat, is disclosed in US-A-4 743 064. However, all that prevents the child seat body from riding up over the aforesaid part of the vehicle (e.g. the fascia) is a strut projecting below the child seat body to engage with a compressible part of the vehicle seat.

According to the present invention, a safety seat of the foregoing type has an abutment member secured to said backrest and having an abutment surface oriented relative to the forward facing surface of the upper part of the backrest so as to form a recess therewith adapted to engage both above and below a rearwardly extending protuberance on the vehicle.

The safety seat may have abutment means projecting rearwardly beyond the seat portion, so as to engage with a substantially vertical surface of the vehicle (e.g. a seat back) behind said substantially horizontal surface. When the horizontal surface is a vehicle seat, the vertical surface is the backrest of such vehicle seat.

Preferably, means are provided for adjusting the distance between the abutment means and the junction between the backrest and the seat portion of the child seat body.

An embodiment of the invention will now be described, by way of example, with reference to the accompanying drawings, in which:
Figure 1 is schematic perspective view of a safety seat in accordance with the invention fitted to the front seat of a motor car;
Figure 2 is a perspective view of the frame of the seat shown in Figure 1; and
Figure 3 is a perspective view of the seat shown in Figures 1 and 2 fitted to the rear seat of a motor car.

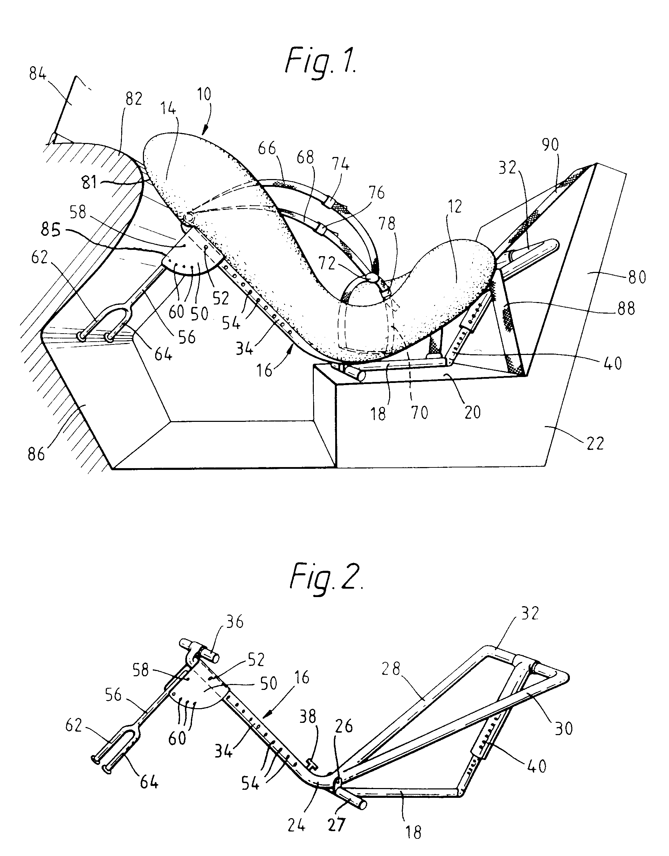

Figure 1 shows a child seat having a seat body 10 with a seat portion 12 and a back portion 14. The seat body 10 is secured to a base frame 16. As can best be seen in Figure 2, the base frame comprises a T-shaped base member 18 which is shown in Figure 1 resting on the seat portion 20 of a front vehicle seat 22. A pivoting frame member 24 is mounted in a pivot bearing 26 located at the junction between the crossbar 27 (Figure 2) and the stem of the T-shaped member 18. The pivoting frame member 24 comprises a triangular portion having two side limbs 28 and 30 which extend from the pivot bearing 26 under the seat portion 12 of the seat body 10 and have their ends joined by a second crossbar 32. The pivoting frame member also includes a single elongate portion 34 having a third crossbar 36 on its free end. The backrest 14 of the seat body 10 is secured both to the third crossbar 36 and, by a spacer bracket 38, to an intermediate point on the elongate portion 34. The free end of the stem of the T-shaped member 18 is pivotally coupled to one end of a telescopic strut 40, the other end of which is pivotally coupled to the crossbar 32. Adjustment of the length of the strut 40 thus permits the orientation of the seat body 10 relative to the vehicle seat 22 to be varied. The strut 40 is constructed so that it can be secured at any desired length within its range of adjustment.

In accordance with the invention, an abutment member 50 is slidably mounted on the portion 34. The abutment member 50 carries a detent formation 52 which is engaged in any of a series of complementary recesses 54 on the elongate portion 34 of the pivoting frame member 24 so as to permit the detent formation to be secured in any of a series of positions between the third crossbar 36 and the spacer bracket 38. A leg 56 is pivotally mounted on the abutment member 50 by a pivot pin 58 and a series of detent formations 60 permit the leg 56 to be secured in any of a plurality of orientations relative to said elongate portion 34. The free end of the leg 56 comprises a bifurcated formation having two limbs 62 and 64 for a purpose to be explained hereinafter.

A harness, provided for restraining a child in the seat body 10, comprises a pair of shoulder straps 66 and 68, a single lap strap 70 and a buckle 72. The shoulder straps 66 and 68 extend from the buckle 72, via respective strap adjusters 74 and 76, through slots in the seat back portion 14 and have their free ends secured to the crossbar 36. The lap strap 70 extends from one side of the buckle 72, via a strap adjuster 78, through a slot in the seat portion 12, round the side limbs 28 and 30 of the base frame 16, and back through another slot in the seat portion 12 to the other side of the buckle 72.

When the child seat is to be installed on the front seat 22 of a motor car, as shown in Figure 1, the base member 18 of its support frame is positioned on the seat portion 20 of the seat 22 and the crossbar 32 abutting against the seat back 80 of the seat 22. The position of the vehicle seat 22 on its seat slides and/or the length of the strut 40 is then adjusted so that the forward facing surface 81 of the upper part of the backrest 14 of the child seat 10 rests on the fascia 82 of the vehicle below the windscreen 84 with the child seat body 10 set at the chosen reclined position. The abutment member 50 is then slid along the elongate portion 34 until a front edge 85 thereof abuts against the underside of the fascia 82. Next, the leg 56 is pivoted round the pivot pin 58 until it engages with a sloping portion 86 of the vehicle which forms the front portion of the footwell for the seat 22. Finally, the seat belt for the seat 22 is secured so that its lap portion 88 surrounds the frame members 28 and 30 and its diagonal portion 90 traverses the crossbar 32.

This arrangement accordingly secures the seat 10 firmly in position and prevents undesirable rearward and upward movement of the backrest 14 in the event of an accident.

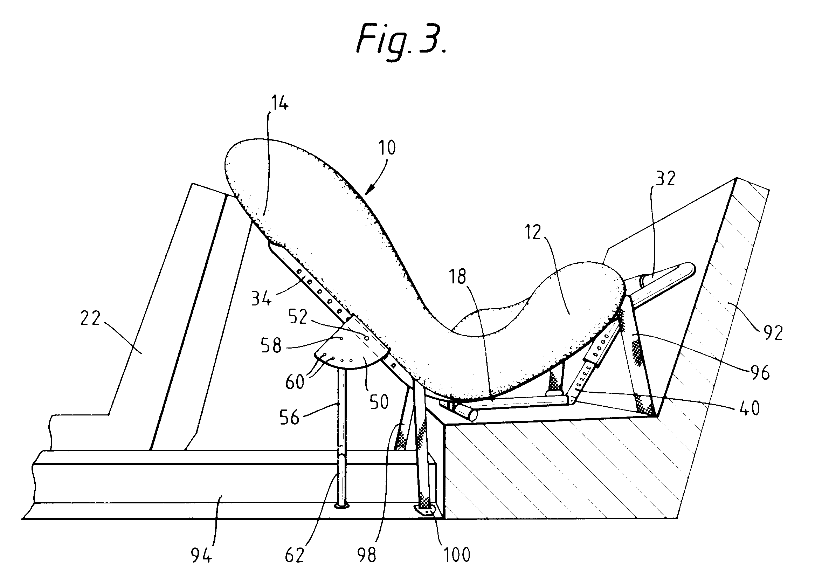

Figure 3 shows how the seat 10 of Figures 1 and 2 can be used on the rear seat 92 of a motor car in a central position above the transmission tunnel 94. The harness is not illustrated. The child seat 10 is positioned on the seat 92 in a similar manner to that described with reference to Figure 1 and secured in position by an adult lap strap 96. However, the leg 56 is pivoted to a position such that its bifurcated end limbs 62 and 64 are located on opposite sides of the transmission tunnel 94, the length of the strut 40 being adjusted so that the leg is firmly engaged. A tether strap 98 is secured to anchorages 100 on the transmission tunnel 94 and extends over the pivoting member 24. The child seat 10 may be wholly behind the front vehicle seats (the front seat 22 being visible in the drawing). Alternatively, it may project between them.

US-A-4 640 545 discloses a child seat having legs connected to the top of its backrest, for use in a similar manner to the leg 56 as illustrated in Figure 3.

## Claims

1. A safety seat for use by a child in a motor vehicle, comprising a child seat body (10) having a backrest (14) and a seat portion (12), support means (16) for supporting the child seat body (10) on a substantially horizontal surface so that a seated occupant faces rearwardly in the vehicle and means (28, 30) secured to the child seat body (10) for engagement with an adult safety belt (88) so as to restrain the child seat body (10) against forward movement, the backrest (14) of the child seat body (10) being adapted to abut against a rearwardly extending protuberance (82) on the vehicle in front of said substantially horizontal surface (20), characterised by an abutment member (50) secured to said backrest (14) and having an abutment surface (85) oriented relative to the forward facing surface (81) of the upper part of the backrest (14) so as to form a recess therewith adapted to engage both above and below the rearwardly extending protuberance (82) on the vehicle.

2. A safety seat according to claim 1, further comprising means (52) for adjusting the distance between the abutment member (50) and the junction between the backrest (14) and the seat portion of the child seat body (10).

3. A safety seat according to claim 1 or 2, having abutment means (32) projecting rearwardly beyond the seat portion, so as to engage with a substantially vertical surface (80) of the vehicle behind said substantially horizontal surface (20).

## Patentansprüche

1. Ein Sicherheitssitz zur Benutzung durch ein Kind in einem Motorfahrzeug, aufweisend: einen Kinder-Sitzkörper (10) mit einer Rückenlehne (14) und einem Sitzabschnitt (12), Trägermittel (16) zum Tragen des Kinder-Sitzkörpers (10) auf einer im wesentlichen horizontalen Oberfläche, so daß ein sitzender Insasse nach rückwärts in dem Fahrzeug ausgerichtet ist, und Mittel (28, 30), die mit dem Kinder-Sitzkörper (10) zu einem Ineingriffgelangen mit einem Erwachsenen-Sicherheitsgurt (88) befestigt sind, so daß der Kinder-Sitzkörper (10) gegenüber einer nach vorwärts gerichteten Bewegung zurückgehalten wird, wobei die Rückenlehne (14) des Kinder-Sitzkörpers (10) dazu befähigt ist, gegen eine sich nach rückwärts erstreckende Ausstülpung (82) an dem Fahrzeug vor der genannten im wesentlichen horizontalen Oberfläche (20) zum Anschlag zu gelangen,
**gekennzeichnet durch**
ein Anschlagelement (50), welches mit der genannten Rückenlehne (14) befestigt ist und eine Anschlag-Oberfläche (85) aufweist, die relativ zu der nach vorwärts weisenden Oberfläche (81) des oberen Teils der Rückenlehne (14) orientiert ist, so daß eine Ausnehmung oder Nische dazwischen gebildet wird, welche dazu befähigt ist, sowohl oberhalb als auch unterhalb mit der sich nach rückwärts erstreckenden Ausstülpung (82) an dem Fahrzeug in Eingriff zu gelangen.

2. Ein Sicherheitssitz gemäß Anspruch 1, welcher weiterhin Mittel (52) zum Einstellen des Abstandes zwischen dein Anschlagelement (50) und der Verbindung zwischen der Rückenlehne (14) und dem Sitzabschnitt des Kinder-Sitzkörpers (10) aufweist.

3. Ein Sicherheitssitz gemäß Anspruch 1 oder 2, mit Anschlag-Mitteln (32), welche nach rückwärts bis jenseits über den Sitzabschnitt hinaus vorspringen, so daß sie mit einer im wesentlichen vertikalen Oberfläche (80) des Fahrzeuges hinter der genannten im wesentlichen horizontalen Oberfläche (20) in Eingriff gelangen.

## Revendications

1. Un siège de sécurité destiné à être utilisé par un enfant dans un véhicule à moteur, comprenant un corps de siège d'enfant (10) ayant un dossier (14) et une partie de siège (12), des moyens de support (16) pour supporter le corps de siège d'enfant (10) sur une surface substantiellement horizontale de telle façon gu'un occupant assis regarde vers l'arrière dans le véhicule et des moyens (28, 30) fixés au corps de siège d'enfant (10) pour s'engager avec une ceinture de sécurité d'adulte (88) de façon à retenir le corps de siège d'enfant (10) contre un mouvement vers l'avant, le dossier (14) du corps de siège d'enfant (10) étant adapté pour buter contre une protubérance (82) s'étendant vers l'arrière sur le véhicule en face de ladite surface substantiellement horizontale (20), caractérisé par un élément de butée (50) fixé audit dossier (14) et ayant une surface de butée (85) orientée par rapport à la surface regardant vers l'avant (81) de la partie supérieure du dossier (14) de façon à former avec celleci un creux apte à s'engager à la fois au-dessus et en dessous de la protubérance (82) s'étendant vers l'arrière sur le véhicule.

2. Un siège de sécurité suivant la revendication 1, comprenant en outre des moyens (52) pour ajuster la distance entre l'élément de butée (50) et la jonction entre le dossier (14) et la partie de siège du corps de siège d'enfant (10).

3. Un siège de sécurité suivant la revendication 1 ou 2, ayant des moyens de butée (32) saillant vers l'arrière au-delà de la partie de siège, de façon à s'appliquer contre une surface substantiellement verticale (80) du véhicule derrière ladite surface substantiellement horizontale (20).
